# EUROPÄISCHE PATENTSCHRIFT

(11) **EP 1 093 859 B1**
(45) Veröffentlichungstag und Bekanntmachung des Hinweises auf die Patenterteilung: **08.01.2003**
(21) Anmeldenummer: 99120792.9
(22) Anmeldetag: 20.10.1999
(51) Int. Cl.: B05B 13/04, B05C 5/02

(54) **Auftragen eines fliessfähigen Materials auf eine flächige Unterlage**
Applying a flowable material onto a flat substrate
Application d'un matériau fluide sur un substrat plat

(43) Veröffentlichungstag der Anmeldung: 25.04.2001
(73) Patentinhaber: Siempelkamp Handling Systeme GmbH & Co., 82515 Wolfratshausen (DE)
(72) Erfinder:
(74) Vertreter: Szynka, Dirk

(56) Entgegenhaltungen:
- DE-A- 3 543 234
- GB-A- 1 144 417
- US-A- 4 153 488
- PATENT ABSTRACTS OF JAPAN vol. 016, no. 234 (C-0945), 29. Mai 1992 (1992-05-29) & JP 04 048957 A (JAPAN SYNTHETIC RUBBER CO LTD;OTHERS: 01), 18. Februar 1992 (1992-02-18)

## Beschreibung

Diese Erfindung richtet sich auf ein Verfahren zum Auftragen eines fließfähigen Materials auf eine flächige Unterlage.

Sie betrifft dabei im allgemeinen jedes denkbare aufzutragende Material, solange es fließfähig ist und aus einer Austrittsöffnung aufgebracht werden kann. Ein bevorzugter Anwendungsbereich der Erfindung liegt jedoch beim Auftragen von Schaummaterialien und Klebstoffen auf Plattenmaterialien, insbesondere auf flexible Bahn- und Plattenmaterialien der Bauindustrie. Allgemein sind auch solche fließfähigen Materialien bevorzugt, die zumindest im Moment des Austretens aus der Austrittsöffnung flüssig oder zähflüssig sind. Z. B. kann es sich um ein flüssiges Schaummaterial in dem Sinn handeln, daß eine aus der Austrittsöffnung austretende Flüssigkeit nach Auftrag auf die Unterlage aufschäumt und einen Schaum erzeugt.

Z. B. zum Beschäumen von Bauplattenmaterialien sind verschiedene Auftragsverfahren bekannt. In jüngster Zeit zeichnet sich zunehmend die Notwendigkeit ab, die Arbeitsgeschwindigkeit solcher Verfahren weiter zu erhöhen. Da der Auftrag in aller Regel bei einer Relativbewegung zwischen der Unterlage und der Austrittsöffnung erfolgt, heißt dies im allgemeinen, daß die Geschwindigkeit dieser Relativbewegung erhöht werden muß. Dies betrifft insbesondere kontinuierliche Auftragsverfahren, bei denen das Material auf endlose Unterlagen oder in vergleichbarer Weise einzelne aneinander gereihte Unterlagen aufgetragen wird.

Dabei ist je nach Anwendungsfall eine bestimmte Auftragsbreite abzudecken, wobei der Begriff Auftragsbreite nicht notwendigerweise impliziert, daß es sich um einen geschlossen flächigen Auftrag handeln muß. Bekannt sind hierzu Auftragsverfahren, bei denen zusätzlich zu einer Bewegung in einer ersten Richtung (entlang der endlosen Unterlage) eine oszillierende, allgemeiner gesagt zyklische Bewegung der Austrittsöffnung in einer Querrichtung erzeugt wird. Dabei ist die Querrichtung im allgemeinen im wesentlichen senkrecht zu der ersten Bewegungsrichtung, jedoch ist dies im Rahmen dieser Erfindung nicht notwendig. Die Querrichtung muß sich natürlich wesentlich von der ersten Richtung unterscheiden. Als vorveröffentlichter Stand der Technik, auf den auch noch im weiteren eingegangen werden wird, ist beispielhaft die DE 197 41 523 A1 zu nennen.

Die GB 1144417 und die JP 4048957 offenbaren ein Verfahren nach dem Oberbegriff des Anspruchs 1.

Dieser Erfindung liegt das technische Problem zugrunde, ein im Hinblick auf hohe Arbeitsgeschwindigkeiten verbessertes Auftragsverfahren anzugeben.

Erfindungsgemäß ist hierzu ein Verfahren zum Auftragen eines fließfähigen Materials auf eine flächige Unterlage über eine Auftragsbreite vorgesehen, bei dem das Material aus einer von der Unterlage beabstandeten Austrittsöffnung in einer freien Fall- oder Wurfbewegung auf die Unterlage aufgebracht wird und dabei eine monotone transiatorische Relativbewegung zwischen der Austrittsöffnung und der Unterlage in einer ersten Richtung erzeugt wird und zusätzlich eine solche zyklische Relativbewegung zwischen der Austrittsöffnung und der Unterlage erzeugt wird, daß sich das aus der Austrittsöffnung austretende fließfähige Material in einer von der ersten Richtung verschiedenen Querrichtung bewegt, gekennzeichnet durch eine freie Fall- oder Wurfbewegung des fließfähigen Materials nach dem Austritt aus der Austrittsöffnung, die so erfolgt, daß infolge der Bewegung in der Querrichtung und des Abstands zwischen Austrittsöffnung und Unterlage eine erforderliche Auftragsbreite in der Querrichtung auf der Unterlage abgedeckt wird, die zumindest das 1 ½ fache der Breite der zyklischen Bewegung der Austrittsöffnung in der Querrichtung beträgt.

Daneben richtet sich die Erfindung auf eine Vorrichtung zur Durchführung dieses Verfahrens mit einer Haltevorrichtung für die flächige Unterlage, einer Auftragsvorrichtung, die die Austrittsöffnung für das fließfähige Material aufweist, und einer Antriebsvorrichtung zur Erzeugung der Relativbewegungen zwischen der Unterlage und der Austrittsöffnung. Die gesamte Beschreibung der Erfindung ist im Hinblick auf das Verfahren und die Vorrichtung zu verstehen.

Bevorzugte Ausgestaltungen der Erfindung sind in den abhängigen Ansprüchen angegeben und ergeben sich aus der folgenden Beschreibung.

Wie sich aus der obenstehenden allgemeinen Definition der Erfindung ergibt, liegt der Grundgedanke darin, daß durch die zyklische Relativbewegung zwischen Unterlage und Austrittsöffnung eine Querbewegung des aus der Austrittsöffnung austretenden fließfähigen Materials zwischen dem Austritt und dem Auftreffen auf die Unterlage erzeugt wird. Diese Querbewegung führt in der Umgebung der Randpunkte der zyklischen Bewegung im Hinblick auf die Querrichtung dazu, daß die Auftragsbreite, die durch die Breite des Auftreffens des fließfähigen Materials auf die Unterlage definiert ist, über die für die zyklische Bewegung notwendige Bewegungsstrecke hinausgeht, indem im Randbereich die Randpunkte der zyklischen Bewegung überschritten werden.

Im allgemeinen wird dabei eine die Austrittsöffnung aufweisende Auftragsvorrichtung für das fließfähige Material in der Querrichtung bewegt werden, während die Unterlage unter der Austrittsöffnung in der ersten Richtung hinwegbewegt wird. Es ist natürlich möglich, beispielsweise die Auftragsvorrichtung auch in der ersten Richtung über die Unterlage hinweg zu bewegen; insbesondere bei Endlosunterlagen ist dies jedoch weniger praktikabel.

Die obenstehende allgemeine Definition der Erfindung ist dabei so zu verstehen, daß sowohl translatorische als auch rotatorische als auch aus translatorischen und aus rotatorischen Komponenten zusammengesetzte Bewegungen der Austrittsöffnungen inbegriffen sind. Bei einer rein translatorischen Bewegung kann man sich die Erfindung so veranschaulichen, daß das aus der Austrittsöffnung austretende fließfähige Material im Randbereich der zyklischen Querbewegung durch seine Massenträgheit über den Endpunkt der Bewegung der Austrittsöffnung hinausfliegt oder geschleudert wird. Im Fall rein rotatorischer Bewegungen ergibt sich aus der zyklischen Richtungsänderung des fließfähigen Materials beim Austritt aus der Austrittsöffnung zusammen mit der Austrittsgeschwindigkeit die erfindungsgemäße Querbewegung des Materials über die Bewegungsstrecke der Bewegung der Austrittsöffnung hinaus. Das Material wird quasi in die Richtung ausgestoßen, in die die Austrittsöffnung gerade zeigt. Im Prinzip ist dabei im rein rotatorischen Fall (auf die Austrittsöffnung selbst bezogen) der Grenzwert einer Bewegungsstrecke von Null realisiert. Im allgemeinen wird jedoch auch bei einer im wesentlichen rotatorischen Bewegung der Auftragsvorrichtung eine translatorische Komponente der Bewegung der Austrittsöffnung selbst vorliegen.

Im Gegensatz zu dem obenstehend beschriebenen Konzept wurde konventionellerweise durch die zyklische Querbewegung der Austrittsöffnung eine Bahn vorgegeben, die im wesentlichen der Bahn des Auftrags des fließfähigen Materials auf die Unterlage entspricht. Durch Schwankungen in der Flugbahn des fließfähigen Materials zwischen dem Austritt aus der Austrittsöffnung und dem Auftreffen auf die Unterlage und durch eine Verbreiterung oder ein sich Auflösen des Strahls sowie ein Verteilen oder Verspritzen auf der Unterlage sind dabei natürlich gewisse Abweichungen aufgetreten. Jedoch stimmte die Bahn des "Schwerpunkts" des Auftrags weitgehend mit der Bewegungsbahn der Austrittsöffnung überein, wie sich beispielsweise auch in dem oben zitierten Stand der Technik deutlich erkennen läßt.

Demgegenüber nutzt die Erfindung die Flugbahn des fließfähigen Materials vor dem Auftreffen auf die Unterlage zu einer wesentlichen Verbreiterung der Auftragsbreite gegenüber der Querbewegungsstrecke der Austrittsöffnung aus, so daß bei gleicher Auftragsbreite mit deutlich verringerter Querbewegungsstrecke gearbeitet werden kann. Dies kann zum einen einen in Raumbedarf und Gewicht verringerten Konstruktionsaufwand ermöglichen. Damit sinken unter Umständen auch die mechanischen Belastungen. Vor allem sind jedoch auch höhere Frequenzen der zyklischen Bewegung bei gleichen Maximalgeschwindigkeiten und - beschleunigungen denkbar. Umgekehrt betrachtet können die mechanischen Beanspruchungen der Konstruktion der Auftragsvorrichtung einschließlich ihrer Haltevorrichtungen durch Trägheitskräfte bei im Vergleich zum konventionellen Fall gleichen Arbeitsfrequenzen erheblich verringert werden. In vielen Fällen werden jedoch die erhöhten Frequenzen der zyklischen Querbewegung von Interesse sein, weil dadurch die Auftragsbahnen des fließfähigen Materials auf der Unterlage enger nebeneinander liegen können und ein dichterer oder im flächigen Fall gleichmäßigerer Auftrag erreicht werden kann.

Hinsichtlich der Begriffsbildung ist hierbei noch festzuhalten, daß die zyklische Querbewegung gemäß der Definition der Erfindung eine im strengen Sinn periodische Bewegung sein kann, aber nicht muß. Sie soll also im wesentlichen immer wiederkehrende Bahnen in einem zyklischen Sinn abfahren, wobei jedoch weder hinsichtlich der Identität der Bahnen noch hinsichtlich der zeitlichen Abfolge eine Periodizität unbedingt notwendig ist. Außerdem ist festzuhalten, daß es sich bevorzugt um eine Hin- und Herbewegung handeln kann, und zwar in dem Sinn daß sich Hin- und Rückwege zumindest im wesentlichen entsprechen, jedoch auch dies nicht unbedingt notwendig ist. Insbesondere sind auch geschlossene Bewegungsbahnen denkbar, bei denen Hin- und Rückwege nicht übereinstimmen, beispielsweise Ellipsen. Wesentlich ist jedoch, daß sich in den Randbereichen der Bewegung im Bezug auf die Querrichtung durch die Austrittsbewegung des Materials aus der Austrittsöffnung und/oder die Bewegung der Austrittsöffnung ein "Überschießen" oder "Weiterfliegen" des Materials zugunsten einer vergrößerten Bewegungsbreite ergibt.

Eingangs wurde bereits erwähnt, daß vor allem flüssige und zähflüssige Materialien in Betracht kommen. Diese Begriffe beziehen sich dabei auf das Gesamtverhalten, schließen also den Einschluß beispielsweise fester Zusätze keineswegs aus.

Wie bereits erwähnt, richtet sich die Erfindung bevorzugt auf den Auftrag von Schaummaterialien bzw. Vorläuferflüssigkeiten und Klebstoffen. In einem allgemeineren Sinn sind solche Materialien bevorzugt, die aus sich heraus eine Reaktion zeigen, z. B. als Gemisch zweier oder mehrerer Reagenzien nach Vermischung als Klebstoff aushärten oder aufschäumen. Diese Definition grenzt sich ab von solchen Materialien, die, solange sie in einem geschlossenen Leitungssystem transportiert werden, keine wesentlichen Veränderungen zeigen und beispielsweise erst bei Atmosphäreneinwirkung durch Verdunstung abbinden oder ähnliches.

Der Unterschied ist insoweit wesentlich, als daß durch die Erfindung die Abdekkung großer Auftragsbreiten mit nur einer Austrittsöffnung oder jedenfalls benachbarten Austrittsöffnungen erleichtert wird. Bei aus sich heraus reagierenden Reaktionsmaterialien würden bei Verwendung mehrerer über die Auftragsbreite verteilter Austrittsöffnungen, also bei einem sogenannten Austrittsrechen, auf dem Weg von einem zentralen Mischkopf bis zu den einzelnen Austrittsöffnungen unvermeidlicherweise relativ lange Transportstrecken auftreten. Dies ist jedenfalls bei Reaktionsmaterialien oder Mischungen mit relativ kurzen Startzeiten, deren Verwendung aus anderen technischen Gründen notwendig sein kann, sehr problematisch. Beispiele sind einige Vertreter aus der Klasse der PUR/PIR-Schaumsysteme (insbesondere Polyurethanschaumsysteme), die überhaupt ein bevorzugter Anwendungsfall der Erfindung sind. Die Verweilzeit innerhalb des Leitungssystems hinter einem Mischkopf kann auch nicht beliebig durch Erhöhung der Durchströmungsgeschwindigkeit verringert werden, weil bei zu hoher Austrittsgeschwindigkeit die Gefahr von Spritzern besteht, die häufig unerwünscht sind. Daneben spielen auch strömungstechnische Probleme in langen Leitungssystemen eine Rolle.

Beispiele für die erwähnten festen Zusätze bei PUR/PIR-Schäumen sind Ammoniumpolyphosphat zum Brandschutz und Schwerspat als Füllstoff.

Beim Auftrag von Schaummaterial gibt es zum einen die Fälle, bei denen die Unterlagen, auf die das fließfähige Material aufgetragen wird, mit dem aufgetragenen Material bzw. dem daraus durch Reaktion hervorgegangenen Material zu einem Endprodukt verarbeitet werden. Beispielsweise können dabei als Unterlagen Bleche, Holzplatten, Faserplatten oder Laminatplatten verwendet werden, die zugunsten isolierender Eigenschaften beschäumt werden. Neben PUR/PIR-Isolierschäumen sind PUR- und andere Klebstoffe ein weiterer wichtiger Anwendungsfall, und zwar vor allem im Hinblick auf Bauplatten. Auch können dabei andere Isolationsmaterialien, z. B. Mineralwollmatten oder -flocken mit einer aufzutragenden Klebstoffschicht auf solche Unterlagen aufgeklebt werden.

Als mit zu verarbeitende Unterlagen kommen ferner flexible Bahnen in Frage, beispielsweise aus oder mit Glasvlies, Papier, Aluminiumfolie, Kunststoffolie oder Bitumen.

Der andere denkbare Fall ist der, daß die Unterlage nur zur Herstellung einer flächigen Struktur aus dem aufgetragenen Material dient, also das Material z. B. nach einem Aushärtevorgang wieder von der Unterlage abgelöst und ohne Unterlage weiter verarbeitet wird. Die Unterlage kann also namentlich auch ein Teil einer erfindungsgemäßen Produktionsvorrichtung sein, beispielsweise ein Transportband.

In beiden Fällen ist es im Rahmen der Erfindung möglich, und häufig auch bevorzugt, auf das aufgebrachte Material im Zuge der Weiterverarbeitung eine Decklage aus anderen Plattenmaterialien, einem Papier, Laminat oder dgl. aufzubringen. Insbesondere können bei Bauplatten statische, Isolations- und Brandschutzgründe für eine Abdeckung sprechen.

Dabei wird zur Herstellung eines festen Verbunds aus dem aufgetragenen Material, der Unterlage und der Decklage vorzugsweise eine nachgeschaltete Doppelbandanlage verwendet, wie sie dem Fachmann auf diesem technischen Gebiet geläufig ist. Auch hierzu wird auf den bereits zitierten Stand der Technik verwiesen.

Vor allem bei den aus sich selbst heraus reagierenden Reaktionsmaterialien und -gemischen ist es oft wichtig, daß beim Auftragen auf die Unterlage kein oder ein möglichst geringes Verspritzen auftritt. Die daraus resultierende Kontamination von Vorrichtungsteilen und auch die möglicherweise zu unscharfe Begrenzung des Randes der Auftragsbreite sind Hauptgründe hierfür. Diese Anforderung bildet unter anderem einen Gesichtspunkt bei der Bemessung des Abstands zwischen der Austrittsöffnung und der Unterlage. Bei zu großem im allgemeinen im wesentlichen vertikal orientierten Abstand sind die Auftreffgeschwindigkeiten des Materials zu hoch. Aus dem anderen erfindungsgemäßen Gesichtspunkt der Querbewegung des fließfähigen Materials über die Randbereiche der Querbewegung der Austrittsöffnung hinaus ist jedoch ein möglichst großer Abstand anzustreben. Im Einzelfall muß ein geeigneter Mittelweg gefunden werden.

Weiter oben wurde bereits festgestellt, daß die zyklische Bewegung translatorische und rotatorische Anteile haben kann. Insbesondere bei aus sich heraus reagierenden Materialien kann es von Bedeutung sein, eine weitgehend oder ausschließlich translatorische Querbewegung zu wählen. Dadurch wird sichergestellt, daß auf der Unterlage benachbartes Material zu nahe beieinander liegenden Zeitpunkten aus der Austrittsöffnung ausgetreten ist und somit einen zeitlich eng zusammenhängender Reaktionsablauf zeigt. Durch die rein translatorische Bewegung ergibt sich nämlich bei einem im wesentlichen konstanten vertikalen Abstand zwischen der Austrittsöffnung und der Unterlage eine annähernd konstante Fallzeit des Materials und ebenso eine im wesentlichen konstante Geschwindigkeitskomponente senkrecht zur Querrichtung (im allgemeinen also im wesentlichen in der ersten Richtung). Dadurch liegen auf der Unterlage bei zumindest im mittleren Bereich nicht zu stark schwankenden Quergeschwindigkeiten der Austrittsöffnung einigermaßen gerade Materialbahnen nebeneinander.

Günstige Weg-Zeit-Abhängigkeitsformen für die Querbewegung sind Sägezahnwellen mit, zur Vermeidung zu großer Trägheitskräfte, abgerundeten Ecken. Die Sägezahnwellen haben den Vorteil, daß sie auch noch in den Randbereichen relativ hohe Querbewegungsgeschwindigkeiten (also Wellenformsteigungen) aufweisen und damit das Hinausschießen des Materials auf dem Weg zur Unterlage über die Randbereiche fördern. Natürlich können auch Wellenformen verwendet werden, die in der Umgebung der Randbereiche noch größere Geschwindigkeiten als in mittleren Bereichen zeigen. In Frage kommen beispielsweise auch Kurven aus zusammengesetzten Parabelstücken. Auf der anderen Seite wurden mit technisch besonders einfach realisierbaren Sinuswellenformen bereits sehr gute Ergebnisse realisiert. Als Antrieb kommen beispielsweise Linearmotoren oder Rotationsmotoren mit Kurbeltrieb in Frage, die bei konstanter Rotationsgeschwindigkeit aus sich heraus weitgehend sinusförmige Weg-Zeit-Abhängigkeiten liefern. Hierzu wird auf die Ausführungsbeispiele verwiesen. Außerdem können auch ausreichend schnelle hydraulische Antriebe verwendet werden.

Es wurde bereits erwähnt, daß die Unterlage selbst der Riemen einer Riementransportbahn sein kann. Auch im Fall einer mitzuverarbeitenden Unterlage ist eine darunterliegende Riementransportbahn möglich. Bevorzugt sind ferner Rollentransportbahnen, vor allem bei Blechen. Für andere Plattenmaterialien kommen bevorzugt einfache Tische in Betracht. Die Auftragsvorrichtung mit der Austrittsöffnung kann dann an einem die Transportbahnen übergreifenden Portal angebracht sein.

Die Einzelheiten der Auftragsvorrichtung und insbesondere der Austrittsöffnung, die auch aus mehreren benachbarten Öffnungen zusammengesetzt sein kann, sind nicht Gegenstand dieser Erfindung. Jedoch hat es sich als günstig herausgestellt, für eine praktisch waagerechte Austrittsrichtung des Materials bei im wesentlichen vertikalem Abstand zwischen Austrittsöffnung und Unterlage zu sorgen.

Zur Vermeidung zu großer bei der Querbewegung bewegter Massen kann es sinnvoll sein, einen notwendigen Mischkopf stationär vorzusehen und mit einer flexiblen Leitung mit dem bewegten Teil der Auftragsvorrichtung zu verbinden. Andererseits sind gerade Reaktionsmaterialien mit sehr kurzen Startzeiten im Rahmen der Erfindung von Interesse, wobei die Leitungsstrecke hinter dem Mischkopf möglichst kurz gehalten werden muß. Dann ist es jedenfalls bei längeren Querbewegungsstrecken im Gegenteil bevorzugt, den Mischkopf mit der Austrittsöffnung mit zu bewegen.

Eingangs wurde festgestellt, daß gerade bei aus sich selbst heraus reagierenden Materialien keine zu großen Leitungsstrecken zwischen Mischkopf und Austrittsöffnung toleriert werden können. Dies bedeutet jedoch nicht, daß die Erfindung auf eine Austrittsöffnung oder unmittelbar benachbarte Austrittsöffnungen beschränkt wäre. Bei besonders großen Auftragsbreiten beispielsweise kann durchaus auch mit zwei oder mehreren beabstandeten Austrittsöffnungen gearbeitet werden, wobei sich die jeweiligen Auftragsbreitestücke im wesentlichen nebeneinander liegend aufaddieren. Insbesondere ist es auch möglich, dabei mit mehreren Mischköpfen zu arbeiten.

In quantitativer Hinsicht ist es erfindungsgemäß bevorzugt, daß die Vergrößerung der Auftragsbreite gegenüber der Gesamtbreite der zyklischen Bewegung mindestens deren Hälfte beträgt. Günstigere Werte sind jedoch eine Vergrößerung auf das mindestens Doppelte, 3fache, 4fache und besonders bevorzugterweise 5fache dieser Breite.

Ein weiterer bevorzugter Gesichtspunkt der Erfindung betrifft die Glättung aufgetragenen Materials auf der Unterlage durch eine nachfolgende Vorrichtung, die Druckgasstrahlen auf das Material richtet. Dies ist vor allem bei der Schaumherstellung von Interesse. Eine solche Vorrichtung kann beispielsweise die Form eines sogenannten Luftrechens haben. Zu Einzelheiten hierzu wird auf den bereits zitierten Stand der Technik verwiesen, der sich diesem Aspekt widmet. Die in dieser Hinsicht dort gemachten Ausführungen gelten auch für diese Erfindung. Insbesondere kann es sinnvoll sein, einen Randwulst, der beispielsweise durch eine Verringerung der Quergeschwindigkeit im Randbereich bei gleichbleibender Auftragsrate entsteht, zu beseitigen, indem ein Teil des Materials in dem Randwulst durch solche Druckgasstrahlen zur Außenseite verschoben wird. Dazu werden bevorzugt nebeneinanderliegende Druckgasstrahlen eingesetzt, die miteinander eine schräg zur ersten Bewegungsrichtung nach außen weisende Linie definieren, die jedoch nicht notwendigerweise gerade sein muß. Auch hierzu wird auf das zitierte Dokument verwiesen.

Wie bereits ausgeführt, richtet sich die Erfindung auf ein Arbeitsverfahren und eine Vorrichtung zur Durchführung des Verfahrens. Die vorstehenden Erläuterungen sowie die nachfolgenden Ausführungsbeispiele sind daher sowohl im Hinblick auf die Offenbarung von Verfahrensmerkmalen als auch von Vorrichtungsmerkmalen zu verstehen. Im Hinblick auf die erfindungsgemäße Vorrichtung hat es sich als sehr sinnvoll herausgestellt, wenn die zyklische Bewegung der Austrittsöffnung zur Feinabstimmung auf den jeweiligen Anwendungsfall einstellbar und im günstigsten Fall frei programmierbar ist. Auch ist es von Vorteil, wenn der Abstand der Austrittsöffnung von der Unterlage eingestellt werden kann. Schließlich ist bevorzugt, daß auch die Austrittsgeschwindigkeit einstellbar ist. Es hat sich nämlich herausgestellt, daß selbst bei horizontalem Austritt des Materials aus der Austrittsöffnung und rein translatorischer Querbewegung auch die Austrittsgeschwindigkeit von Bedeutung ist. Sie beeinflußt die "Flugbahn" des Materialstrahls und die Kohäsion der Flüssigkeitsteilchen sowie die Scherkräfte innerhalb des Materials bei viskosen Materialien. Auch die Auftragsbreite hängt von der Austrittsgeschwindigkeit ab, wenn auch im allgemeinen in nicht sehr erheblichem Umfang.

Die Erfindung wird im folgenden anhand zweier Ausführungsbeispiele näher erläutert, die in den Figuren dargestellt sind. Dabei offenbarte Merkmale des erfindungsgemäßen Verfahrens und der erfindungsgemäßen Vorrichtungen können auch in anderen Kombinationen erfindungswesentlich sein. Im einzelnen zeigt
Fig. 1 eine schematische perspektivische Darstellung einer erfindungsgemäßen Vorrichtung;
Fig. 2 eine schematische Draufsicht auf die Vorrichtung nach Fig. 1 mit weiteren Einzelheiten;
Fig. 3 eine perspektivische Ausschnittsansicht einer erfindungsgemäßen Vorrichtung nach einem zweiten Ausführungsbeispiel.

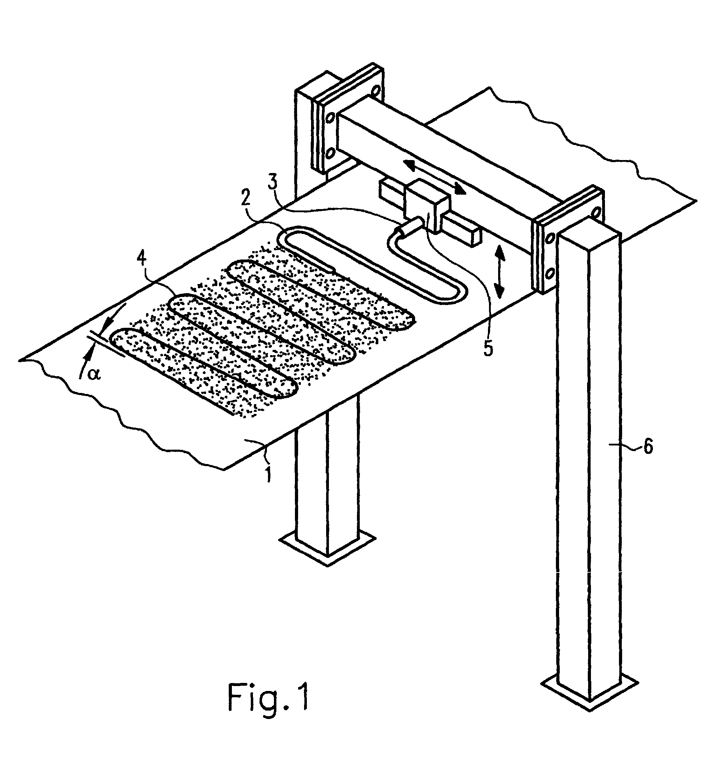

Figur 1 zeigt eine schematisch dargestellte Unterlage, nämlich einen Papierstreifen 1, der auf einem nicht näher dargestellten Tisch einer Produktionsstraße mit nachgeschalteter Doppelbandanlage transportiert wird. Die Erfindung betrifft eine Vorrichtung zum Auftragen eines Reaktionsgemischs, aus dem nach dem Auftragen ein PUR/PIR-Schaum entsteht. Es handelt sich also um die Beschäumstation einer Produktionsstraße für Sandwichelemente aus einer Papierunterlage 1, einem durch die Beschäumstation aufgetragenen PUR/PIR-Schaum und einer vor der nicht dargestellten Doppelbandanlage auf den PUR/PIR-Schaum in ebenfalls nicht dargestellter Weise aufgebrachten Papieroberlage. In der temperierten Doppelbandanlage reagiert der PUR/PIR-Schaum zwischen der Unterlage und der Oberlage bei vorgegebenem Abstand zwischen Unterlage und Oberlage vollständig aus. Die Einzelheiten zur Herstellung solcher Sandwichelemente sind dem Fachmann bekannt. Hierzu kann auch auf die bereits zitierte DE 197 41 523 A1 verwiesen werden.

Für die Erfindung ist nur wesentlich, daß das Reaktionsgemisch in fließfähigem und praktisch noch nicht aufgeschäumten Zustand auf die Unterlage 1 über praktisch deren gesamte Breite möglichst gleichmäßig aufgetragen wird. In Figur 1 ist schematisch dargestellt, wie das fließfähige Reaktionsgemisch 2 aus einer Austrittsöffnung 3 als im wesentlichen geschlossener flüssiger Strahl austritt und in einer schlangenförmigen Bewegung auf die Unterlage 1 herabfällt. Dabei ist es bevorzugt, daß der noch im Fallen befindliche Strahl 2 durch eine Krümmung einen, bzw. vorzugsweise durch zwei Krümmungen zwei, der Eckpunkte der Querbewegungen widerspiegelt. Auf der Unterlage ist angedeutet, daß sich durch den auftreffenden Strahl des Reaktionsgemischs 2 mäanderförmig nebeneinanderliegende Bahnen ergeben, deren gedachte Mittellinien durch die durchgezogene Linie 4 dargestellt sind. Tatsächlich verlaufen die mäanderförmigen Bahnen nicht linienförmig, sondern sind durch das Auftreffen des Reaktionsgemischs 2 einerseits und den einsetzenden Aufschäumprozess andererseits verbreitert, laufen ineinander und erhöhen sich zunehmend.

Des weiteren zeigt Fig. 1 symbolisch, daß der Strahl 3 über seine dem Höhenabstand zwischen der Austrittsöffnung 3 und der Unterlage 1 entsprechende Flugstrecke ein geschlossener zusammenhängender Flüssigkeitsstrahl bleibt. Dies ist zum einen eine zeichnerisch gut darstellbare Situation. Sie kommt den tatsächlichen Verhältnissen bei Versuchen mit PUR/PIR-Material auch recht nah. Allerdings können bei der Erfindung genauso gut austretende Materialien in nicht zusammengehaltener Form sondern als Tropfenschwall oder ungeordneter, teils zusammengehaltener, teils aufgelöster Strahl vorkommen. Geometrische Aussagen in dieser Beschreibung betreffen dann eine gedachte Strahlmittellinie oder - schwerpunktslinie.

Fig. 1 zeigt dabei eine schematisierte und in ihren Einzelheiten für diese Erfindung nicht wesentliche Auftragsvorrichtung 5, an der sich die Austrittsöffnung 3 an einem kurzen Rohrstück befindet. Wesentlich ist hier nur, daß die Austrittsrichtung des Reaktionsgemischs 2 aus der Austrittsöffnung 3 horizontal in Längsrichtung der Unterlage 1 gerichtet ist, was sich empirisch bewährt hat.

Die Auftragsvorrichtung 5 ist durch einen im folgenden noch näher beschriebenen Antrieb beweglich an einem Portal 6 angebracht, daß die Papierstreifenunterlage 1 und die nicht dargestellte Transportbahn überspannt. Ferner ist dargestellt, daß die Quertraverse des Portals 6 höhenverstellbar ist.

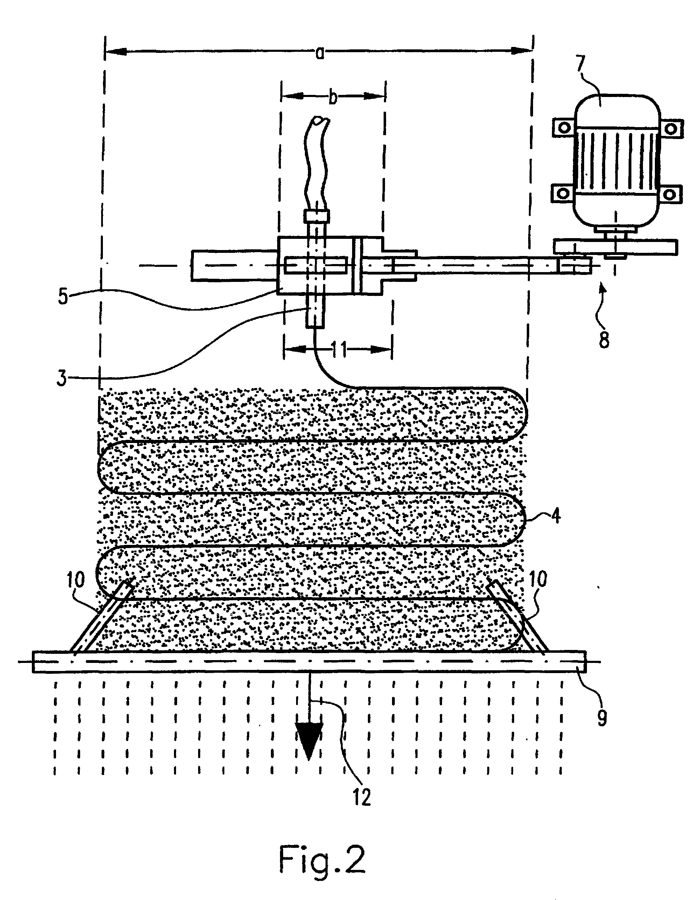

Fig. 2 zeigt eine Draufsicht auf die Vorrichtung aus Fig. 1, wobei die Unterlage 1 und das Portal 6 nicht dargestellt sind. Der Einfachheit halber ist ferner die Linie 4 bereits ab der Austrittsöffnung 3 eingezeichnet. Damit wird angedeutet, daß die Form des Strahls des Reaktionsgemischs 2 vor dem Auftreffen bereits weitgehend die Verteilung auf der Unterlage 1 vorgibt. Allerdings entspricht die Form des Strahls nicht identisch der "Schwerpunktslinie" 4 des auf die Unterlage 1 aufgetragenen Materials 2. Vielmehr wird erfindungsgemäß angestrebt, daß sich durch die hier rein translatorische Querbewegung (mit 11 bezeichnet) der Austrittsöffnung gegenüber der Unterlage Quergeschwindigkeitskomponenten des ausgetretenen Reaktionsgemischs 3 ergeben, die dieses über die durch die Querbewegung abgedeckte Breite hinausbefördern.

In Fig. 2 ist dies angedeutet durch eine mit a bezeichnete Auftragsbreite des Reaktionsgemischs 2 auf der Unterlage 1, die deutlich größer ist als die Breite b der Querbewegung der Austrittsöffnung 3. Im vorliegenden Beispiel beträgt a etwa das 3fache von b. Bei Versuchen konnten aber auch Werte für a von weit mehr als 5 b erreicht werden. Das bedeutet, daß das in den Außenrandbereichen der Breite b aus der Austrittsöffnung 3 austretende Material 2 durch eine entsprechend hohe Geschwindigkeit der Querbewegung 11 der Auftragsvorrichtung 5 mit der Austrittsöffnung 3 während der Bewegung von der Austrittsöffnung 3 zur Unterlage 1 in Querrichtung noch etwa um die Breite b "weiterfliegt". Dabei handelt es sich tatsächlich um eine Bewegung, die zusammengesetzt ist aus der Bewegung infolge der Austrittsgeschwindigkeit des Materials 2 (hier in Längsrichtung der Unterlage), der Quergeschwindigkeit infolge der Bewegung 11 der Auftragsvorrichtung 5 und der Fallbewegung in der Senkrechten. Für kleine Volumeneinheiten des austretenden Materials 2 handelt es sich also um eine angenäherte Wurfparabel, deren Querkomponente ausreichend groß sein muß. Hierbei ist der Begriff der Auftragsbreite a auf die Breite der "Schwerpunktslinie" 4 bezogen, d.h. gewissermaßen auf den Auftreffort des Strahlmittelpunkts. Durch das Verlaufen und Aufschäumen des Reaktionsgemischs 2 auf der Unterlage 1 ergibt sich darüber hinaus noch ein gewisser Breitenzuwachs. Dieser Breitenzuwachs würde sich in ähnlicher Weise aber auch ohne ausgeprägte Querbewegung der Austrittsöffnung 3 ergeben.

Aus der schematischen Darstellung der Linie 4 in Fig.2 ergibt sich, daß sich die Austrittsöffnung 3 mit einer im Vergleich zu der durch den Pfeil 12 angedeuteten gleichförmigen Bewegung der Unterlage in Längsrichtung (der ersten Richtung) relativ hohen Geschwindigkeit hin- und herbewegt. Dadurch ergeben sich relativ eng nebeneinanderliegende Materialbahnen auf der Unterlage, wie durch die Linie 4 versinnbildlicht. Die Materialbahnen sind dabei fast in Querrichtung orientiert, wenn man von den Randbereichen absieht. Bei der Erfindung ist dabei bevorzugt, daß der Winkel α (vgl. Fig. 1) zwischen den mittleren Abschnitten der Bahnen und der Querrichtung kleiner als 30°, vorzugsweise kleiner als 20°, besonders vorzugsweise kleiner als 10°, im optimalen Fall sogar kleiner als 5° ist. Um so kleiner dieser Winkel ist, um so größer sind die Geschwindigkeit und die Frequenz der zyklischen Hin- und Herbewegung 11 der Austrittsöffnung 3 relativ zu der Längsbewegung der Unterlage 1.

Die Möglichkeit der Erhöhung der Frequenz der zyklischen Bewegung 11 in der Breite b ist gerade eine Fortschritt der Erfindung, bei der die Breite b gegenüber der Auftragsbreite a deutlich verringert ist. Dadurch können je nach Bedarf engliegende Bahnen des Materials auf der Unterlage 1 bei gleichzeitig vernünftiger Vorschubgeschwindigkeit der Unterlage 1 in Richtung 12 erzielt werden. Gleichzeitig ist der konstruktive Aufwand begrenzt, weil die Beschränkung auf die Breite b nicht nur geometrische Vorteile bringt, sondern bei gleicher Frequenz der zyklischen Bewegung auch die Trägheitskräfte deutlich verringert.

Bei dem dargestellten Beispiel ist als Antrieb ein Elektromotor 7 mit einer rotierenden Abtriebswelle vorgesehen, der über einen Kurbelantrieb 8 bei gleichförmiger Rotation der Abtriebswelle im wesentlichen eine sinusförmige Bewegung 11 der Auftragsvorrichtung 5 erzeugt. Mit diesen angenähert sinusförmigen Weg-Zeit-Verläufen konnten bereits sehr gute Ergebnisse erzielt werden. Insbesondere konnte durch die enge Benachbarung der Bahnen und die fast in Querrichtung liegende Ausrichtung der mittleren Abschnitte der Bahnen eine sehr gute Gleichmäßigkeit des Materialauftrags und des entstehenden PUR/PIR-Schaums erzielt werden.

Noch weiter verbessert werden kann diese Gleichmäßigkeit durch eine aus dem zitierten Stand der Technik bereits bekannte sogenannte Luftrechenvorrichtung, die durch senkrecht zur Unterlage 1 verlaufende nach unten gerichtete Druckgasstrahlen eine Vielzahl kleiner Krater in dem aufschäumenden PUR/PIR-Material erzeugt, wobei sich nach Durchtritt unter dem Luftrechen 9 durch die Ausgleichsbewegungen des noch fließfähigen PUR/PIR-Schaums eine in Fig. 2 zeichnerisch angedeutete Glättung der gesamten Oberfläche ergibt. Ferner werden dabei seitliche Abschnitte mit weiteren Druckgasstrahlen verwendet, die durch eine schräge Orientierung zur Richtung 12 einen Teil des im Randbereich als Randwulst überschüssigen Materials aus dem Randbereich nach außen wegdrükken, um damit auch am Randbereich eine gleichmäßige Schichtdicke des PUR/PIR-Schaums zu erzeugen. Zu weiteren Einzelheiten wird auf das bereits mehrfach zitierte Dokument verwiesen.

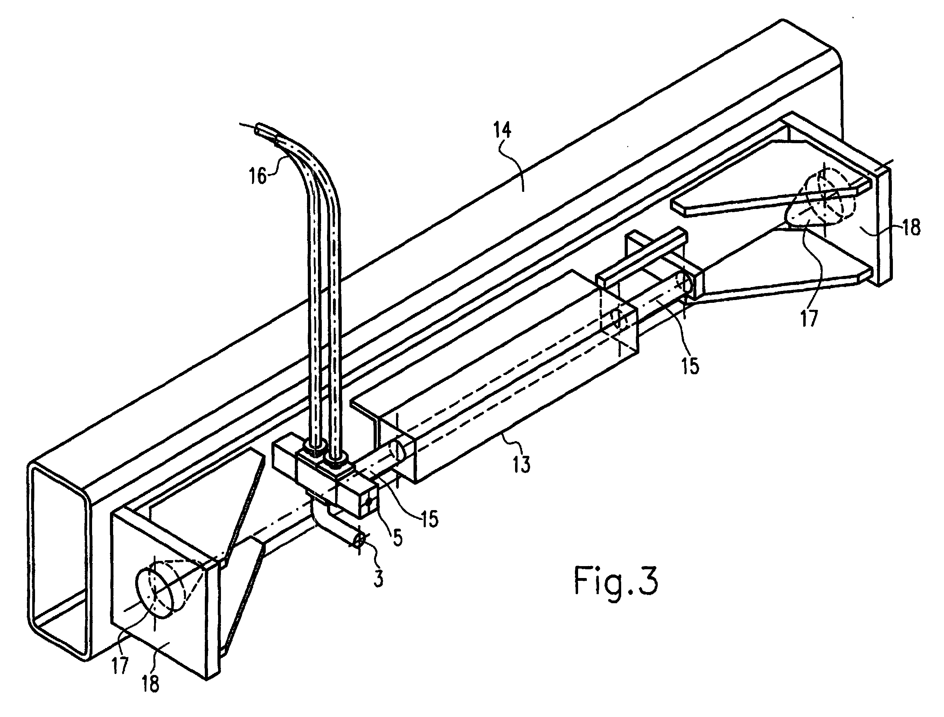

Schließlich zeigt Fig. 3 ein alternatives Ausführungsbeispiel, bei dem anstelle des Rotationsmotors 7 mit Kurbeltrieb 8 ein Linearmotor 13 verwendet wird. Fig. 3 beschränkt sich auf die Darstellung einer Quertraverse 14 des Portals 6, an der der horizontal in Querrichtung ausgerichtete Linearmotor 13 befestigt ist. Der Linearmotor 13 enthält einen Läufer 15, an dessen einem Ende eine hier nur schematisch dargestellte Auftragsvorrichtung 5 mit einem Mischkopf und einer ebenfalls nicht im einzelnen für die Erfindung bedeutsamen Austrittsöffnung 3 angebracht ist. Wenn, wie hier, der Mischkopf mit von der Querbewegung erfaßt wird, ermöglicht dies sehr kurze Abstände zwischen dem Mischkopf und der Austrittsöffnung 3. Dies ist vor allem für Reaktionsgemische mit sehr kurzer Startzeit von Vorteil, die dann getrennt zugeführt werden können. Von der Auftragsvorrichtung 5 führen zwei Schlauchleitungen 16 als Versorgungsleitungen für die Reagenzien des PUR/PIR-Reaktionsgemischs weg. Im Gegensatz dazu ist bei dem ersten Ausführungsbeispiel ein stationärer Mischkopf vorgesehen, von dem aus eine in Fig. 2 erkennbare einfache flexible Schlauchleitung zu der Auftragsvorrichtung führt. Dadurch kann eine kleinere bewegte Masse erzielt werden.

Ferner sind an der Quertraverse 14 zwei mit Gummipuffern 17 versehene Endanschläge 18 zur Begrenzung der Bewegungen des Läufers 15 und der Auftragsvorrichtung 5 vorgesehen. Die in der Fig. 3 hintere rechte Begrenzung wirkt dabei mit dem der Auftragsvorrichtung entgegengesetzten Ende des Läufers 15 zusammen.

Der Linearmotor 13 benötigt kein weiteres Getriebe wie den Kurbeltrieb 8 und hat ferner den Vorteil, daß durch entsprechende Ansteuerung verschiedenster Weg-Zeit-Verläufe der Querbewegungen der Auftragsvorrichtung 5 programmiert werden können. Natürlich ist es auch denkbar, den rotierenden Elektromotor 7 aus Fig. 2 so anzusteuern, daß die Rotation nicht gleichförmig ist und damit auch andere als angenähert sinusförmige Weg-Zeit-Verläufe der Querbewegung erzielt werden können.

Die bei den dargestellten Ausführungsbeispielen verwendeten Austrittsgeschwindigkeiten lagen im Bereich von 1 bis 3 m/s. Bei höheren Geschwindigkeiten der Unterlage sind eher höhere, bei niedrigeren Unterlagengeschwindigkeiten eher niedrige Austrittsgeschwindigkeiten bevorzugt.

In gleicher Weise wie anhand der Figuren 1, 2 und 3 beschrieben, können auch Plattenmaterialien mit Klebstoff bedeckt werden, so daß nachfolgend zum Beispiel Dämmstoffe aufgeklebt werden können. Dabei kann es sich auch um Reaktionsgemische, nämlich Zwei- oder Mehrkomponentenklebstoffe, oder auch um einfache Klebstoffe handeln. Die Unterlagen können statt Blechen natürlich auch andere Plattenmaterialen sein, vor allem Holzplatten, Faserplatten, Laminatplatten und andere Materialien, die für Bauplatten Verwendung finden. Beim Klebeauftrag kann die Austrittsgeschwindigkeit beispielsweise bei etwa 10 m/s liegen.

Der in den Ausführungsbeispielen verwendeten rein translatorischen Querbewegung kann natürlich auch eine rotatorische Komponente überlagert sein. Die rein translatorische Bewegung hat allerdings den Vorteil, daß der Überschuß der Auftragsbreite a gegenüber der Bewegungsbreite b im wesentlichen durch die Querbewegung und den Höhenabstand zwischen Austrittsöffnung und Unterlage 1 gegeben ist. Bei rotatorischen Komponenten spielt auch die Austrittsgeschwindigkeit des Materials 2 aus der Austrittsöffnung 3 eine größere Rolle. Außerdem führen translatorische Querbewegungen eher zu nicht zu stark gekrümmten Auftragsbahnen auf der Unterlage. Dadurch schäumt benachbartes Schaummaterial in etwa zeitgleich hoch. Vorzugsweise ist die Querbewegung, insbesondere bei dem zweiten Ausführungsbeispiel, frei programmierbar. Außerdem sollte das Portal 6 so aufgebaut sein, daß die Höhe der Austrittsöffnung 3 über der Unterlage 1 einstellbar ist, was hier nicht zeichnerisch dargestellt ist.

Natürlich kann auch mit zwei oder mehreren Auftragsvorrichtung nebeneinander gearbeitet werden, wobei man sich den Aufbau bei entsprechend vergrößerter Portalbreite und Breite der Unterlage doppelt oder mehrfach nebeneinander vorstellen muß. Allerdings hat die Erfindung gerade den Sinn, besonders große Auftragsbreiten zu ermöglichen, so daß häufig eine Auftragsvorrichtung ausreichen wird.

## Patentansprüche

1. Verfahren zum Auftragen eines fließfähigen Materials (2) auf eine flächige Unterlage (1) über eine Auftragsbreite (a),
bei dem das Material (2) aus einer von der Unterlage (1) beabstandeten Austrittsöffnung (3) in einer freien Fall- oder Wurfbewegung auf die Unterlage (1) aufgebracht wird
und dabei eine monotone translatorische Relativbewegung (12) zwischen der Austrittsöffnung (3) und der Unterlage (1) in einer ersten Richtung erzeugt wird
und zusätzlich eine solche zyklische Relativbewegung (11) zwischen der Austrittsöffnung (3) und der Unterlage (1) erzeugt wird, daß sich das aus der Austrittsöffnung (3) austretende fließfähige Material (2) in einer von der ersten Richtung verschiedenen Querrichtung bewegt,
**dadurch gekennzeichnet, dass** die freie Fall- oder Wurfbewegung des fließfähigen Materials (2) nach dem Austritt aus der Austrittsöffnung (3) so erfolgt, daß infolge der Bewegung (11) in der Querrichtung und des Abstands zwischen Austrittsöffnung (3) und Unterlage (1) eine erforderliche Auftragsbreite (a) in der Querrichtung auf der Unterlage (1) abgedeckt wird, die zumindest das 1 1/2fache der Breite (b) der zyklischen Bewegung (11) der Austrittsöffnung (3) in der Querrichtung beträgt.

2. Verfahren nach Anspruch 1, bei dem das fließfähige Material (2) insgesamt zähflüssig oder flüssig ist.

3. Verfahren nach Anspruch 1 oder 2, bei dem das Material (2) ein aus sich heraus reagierendes Reaktionsmaterial, insbesondere ein Gemisch von Reagenzien ist.

4. Verfahren nach einem der vorstehenden Ansprüche, bei dem das Material ein Klebstoff ist.

5. Verfahren nach einem der vorstehenden Ansprüche, bei dem das Material (2) ein Schaummaterial, insbesondere ein PUR/PIR-Schaummaterial ist.

6. Verfahren nach einem der vorstehenden Ansprüche, bei dem aus dem aufgetragenen Material (2) als Endprodukt Bauplatten hergestellt werden.

7. Verfahren nach einem der vorstehenden Ansprüche, bei dem das aufgetragene Material (2) zusammen mit der Unterlage (1) zu einem Endprodukt verarbeitet wird.

8. Verfahren nach Anspruch 7, bei dem die Unterlage (1) Blech, Holzplatten, Faserplatten oder Laminatplatten aufweist.

9. Verfahren nach Anspruch 7 oder 8, bei dem die Unterlage (1) eine Bahn aus Glasvlies, Papier, Aluminiumfolie, Kunststoffolie, Bitumen oder einer Kombination daraus aufweist.

10. Verfahren nach einem der vorstehenden Ansprüche, bei dem nach dem Auftragen des Materials (2) auf die Unterlage (1) auf das aufgetragene Material eine Decklage aufgebracht wird.

11. Verfahren nach Anspruch 7 und 10, bei dem zur Herstellung eines Verbunds aus der Unterlage (1), dem aufgetragenen Material (2) und der Decklage eine Doppelbandanlage verwendet wird.

12. Verfahren nach einem der vorstehenden Ansprüche, bei dem die zyklische Bewegung (11) eine zumindest im wesentlichen translatorische Bewegung ist.

13. Verfahreh nach Anspruch 12, bei dem die zyklische Bewegung (11) eine Weg-Zeit-Abhängigkeit aufweist, die sinusförmig, zusammengesetzt parabelförmig oder sägezahnförmig mit abgerundeten Ecken verläuft.

14. Verfahren nach Anspruch 12 oder 13, bei dem zur Erzeugung der zyklischen Bewegung (11) ein Linearmotor (13) verwendet wird.

15. Verfahren nach Anspruch 12 oder 13, bei dem zur Erzeugung der zyklischen Bewegung (11) ein Hydraulikantrieb verwendet wird.

16. Verfahren nach Anspruch 12 oder 13, bei dem zur Erzeugung der zyklischen Bewegung (11) ein Rotationsmotor (7) mit einem Kurbeltrieb (8) verwendet wird.

17. Verfahren nach einem der vorstehenden Ansprüche, bei dem sich die Unterlage (1) auf einer Rollen- oder Riementransportbahn oder einem Tisch bewegt, wobei die Austrittsöffnung (3) an einem Portal (6) über die Transportbahn bzw. den Tisch angebracht ist.

18. Verfahren nach einem der vorstehenden Ansprüche, bei dem das fließfähige Material (2) aus der Austrittsöffnung (3) horizontal austritt.

19. Verfahren nach einem der vorstehenden Ansprüche, zumindest Anspruch 3, bei dem ein Mischkopf (5) zur Herstellung des Reagenziengemischs (2) mit der Bewegung (11) der Austrittsöffnung (3) mitbewegt wird.

20. Verfahren nach einem der vorstehenden Ansprüche, bei dem das Material aus zumindest zwei Austrittsöffnungen aufgetragen wird, wobei die auf der Unterlage in der Querrichtung jeweils durch das Material erfaßten Bereiche im wesentlichen nebeneinander liegen.

21. Verfahren nach einem der vorstehenden Ansprüche, bei dem das Material aus zumindest zwei benachbarten Austrittsöffnungen aufgetragen wird.

22. Verfahren nach einem der vorstehenden Ansprüche, bei dem die Auftragsbreite (a) des Materials (2) auf der Unterlage (1) in der Querrichtung zumindest das 2fache, vorzugsweise das 3fache, noch besser das 4fache und günstigstenfalls zumindest das 5fache der Gesamtbreite (b) der zyklischen Bewegung (11) der Austrittsöffnung (3) beträgt.

23. Verfahren nach einem der vorstehenden Ansprüche, bei dem das auf die Unterlage (1) aufgetragene Material durch Druckgasstrahlen (9,10) geglättet wird.

24. Verfahren nach Anspruch 23, bei dem durch die Druckgasstrahlen (10) eine Randwulst einer aufgetragenen Bahn des Materials durch zur Außenseite Verschieben eines Teils des Materials eingeebnet wird.

25. Vorrichtung zur Durchführung des Verfahrens nach einem der vorstehenden Ansprüche mit
einer Haltevorrichtung für die flächige Unterlage,
einer Auftragsvorrichtung (5) für das fließfähige Material (2), die die Austrittsöffnung (3) aufweist, und
einer Antriebsvorrichtung (7,13) zur Erzeugung der Relativbewegungen zwischen der Unterlage und der Austrittsöffnung, so daß die Auftragsbreite in der Querrichtung zumindest das 1 ½ fache der Breite der zyklischen Bewegung der Austrittsöffnung in der Querrichtung beträgt.

26. Vorrichtung nach Anspruch 25, bei der die zyklische Bewegung (11) der Austrittsöffnung (3) frei programmierbar ist.

27. Vorrichtung nach Anspruch 25 oder 26, bei der der Abstand der Austrittsöffnung (3) von der Unterlage einstellbar ist.

28. Vorrichtung nach Anspruch 25, 26 oder 27, bei der die Geschwindigkeit des Austritts des fließfähigen Materials (2) aus der Austrittsöffnung (3) einstellbar ist.

## Claims

1. A method of applying a flowable material (2) to a sheet substrate (1) over an application width (a), wherein
said material (2) is applied from an orifice spaced away from said substrate (1) a free fall or fling movement onto said substrate (1),
whereby a monotonic translatory relative movement (12) between said orifice (3) and said substrate (1) is generated in a first direction and
additionally, a cyclic relative movement (11) is generated between said orifice (3) and said substrate (3) such that said flowable material (2) emerging from said orifice (3) is moved in a transverse direction different from said first direction,
**characterized in that**
the free fall or fling movement of said flowable material (2) takes place after its emerging from said orifice (3) such that due to said movement (11) in said transverse direction and said spacing between said orifice (3) and said substrate (1) a required application width (a) in said transverse direction is covered on said substrate (1) which is at least 1 1/2 the width (b) of said cyclic movement (11) of said orifice (3) in said transverse direction.

2. The method as set forth in claim 1 wherein said flowable material (2) is in all viscous or liquid.

3. The method as set forth in claims 1 or 2 wherein said material (2) is a self-reacting material, particularly mixture of reagents.

4. The method as set forth in one of the preceding claims wherein said material (2) is an adhesive.

5. The method as set forth in one of the preceding claims wherein said material (2) is a foam material, in particular a PUR/PIR foam material.

6. The method as set forth in one of the preceding claims wherein from said applied material (2) construction boards are produced as the final product.

7. The method as set forth in one of the preceding claims wherein said applied material (2) together with said substrate (1) is processed into a final product.

8. The method as set forth in claim 7 wherein said substrate (1) comprises sheet metal, wood boards, fiber boards or laminated boards.

9. The method as set forth in claim 7 or 8 wherein said substrate (1) comprises a web of glass felt, paper, aluminum foil, plastics film, bitumen or a combination thereof.

10. The method as set forth in one of the preceding claims wherein after application of said material (2) to said substrate (1) a skin is applied to said applied material.

11. The method as set forth in claim 7 and 10 wherein for producing a composite of said substrate (1), the applied material (2) and skin a double band system is used.

12. The method as set forth in one of the preceding claims wherein said cyclic movement (11) is an at least substantially translatory movement.

13. The method as set forth in claim 12 wherein said cyclic movement (11) is a distance-time function of sinusoidal shape or is composed of parabolic parts or is of sawtooth-shape with rounded corners.

14. The method as set forth in claim 12 or 13 wherein a linear motor (13) is used to generate said cyclic movement (11).

15. The method as set forth in claim 12 or 13 wherein a hydraulic drive is used to generate said cyclic movement (11).

16. The method as set forth in claim 12 or 13 wherein a rotational motor (7) with a crank drive (8) is used to generate said cyclic movement (11).

17. The method as set forth in one of the preceding claims wherein said substrate (1) moves on a roller or belt conveyor or a table, said orifice (3) being fitted to a portal (6) above said conveyor or table.

18. The method as set forth in one of the preceding claims wherein said flowable material (2) emerges horizontally from said orifice (3).

19. The method as set forth in one of the preceding claims, wherein a mixer head (5) for producing said reagent mixture (2) is included in said movement (11) of said orifice (3).

20. The method as set forth in one of the preceding claims wherein said material is applied from at least two orifices, the portions on said substrate covered by said material in said transverse direction in each case being located substantially adjacently.

21. The method as set forth in one of the preceding claims wherein said material is applied from at least two adjacent orifices.

22. The method as set forth in one of the preceding claims wherein said application width (a) of said material (2) on said substrate (1) in said transverse direction amounts to at least 2 times, preferably 3, even better 4 and best of all 5 times said total width (b) of said cyclic movement (11) of said orifice (3).

23. The method as set forth in one of the preceding claims wherein said material applied to said substrate (1) is smoothed by jets of compressed gas (9, 10).

24. The method as set forth in claim 23 wherein an edge bead of an applied web of said material is flattened out by part of said material being shifted outwardly by said jets of compressed gas (10).

25. A device for implementing the method as set forth in one of the preceding claims, comprising
a device for holding said sheet substrate,
an applicator (5) for said flowable material (2) comprising said orifice (3), and
a drive assembly (7, 13) for generating said relative movements between said orifice and said substrate so that the application width in said transverse direction is at least 1 1/2 the width of said cyclic movement of said orifice in said transverse direction.

26. The device as set forth in claim 25 wherein said cyclic movement (11) of said orifice (3) is freely programmable

27. The device as set forth in claim 25 or 26 wherein said spacing of said orifice (3) from said substrate is adjustable.

28. The device as set forth in claim 25, 26 or 27, wherein the velocity at which said flowable material (2) emerges from said orifice (3) is adjustable.

## Revendications

1. Procédé pour appliquer un matériau coulant (2) sur un support plat (1) sur une largeur d'application (a),
avec lequel le matériau (2) est appliqué sur le support (1) à partir d'un orifice de sortie (3) écarté du support (1) dans un mouvement libre de chute ou de projection
et un mouvement relatif de translation monotone (12) est ici produit entre l'orifice de sortie (3) et le support (1)
et un mouvement relatif cyclique (11) supplémentaire est produit entre l'orifice de sortie (3) et le support (1) de manière à ce que le matériau coulant (2) qui sort de l'orifice de sortie (3) se déplace dans une direction transversale différente de la première direction,
**caractérisé en ce que** le mouvement libre de chute ou de projection du matériau coulant (2) a lieu après sa sortie de l'orifice de sortie (3) de telle manière que le mouvement (11) dans le sens transversal et de l'écart entre l'orifice de sortie (3) et le support (1) recouvre une largeur d'application nécessaire (a) dans le sens transversal sur le support (1), laquelle s'étend au moins sur 1,5 fois la largeur (b) du mouvement cyclique (11) de l'orifice de sortie (3) dans le sens transversal.

2. Procédé selon la revendication 1, avec lequel le matériau coulant (2) est globalement visqueux ou liquide.

3. Procédé selon la revendication 1 ou 2, avec lequel le matériau (2) est un matériau réactif qui réagit de lui-même, plus particulièrement un mélange d'agents réactifs.

4. Procédé selon l'une des revendications précédentes, avec lequel le matériau est une colle.

5. Procédé selon l'une des revendications précédentes, avec lequel le matériau (2) est un matériau moussant, plus particulièrement une mousse PUR/PIR.

6. Procédé selon l'une des revendications précédentes, avec lequel des panneaux de construction sont fabriqués à partir du matériau appliqué (2) en tant que produit fini.

7. Procédé selon l'une des revendications précédentes, avec lequel le matériau appliqué (2) combiné avec le support (1) est traité pour former un produit fini.

8. Procédé selon la revendication 7, avec lequel le support (1) présente de la tôle, des panneaux en bois, des panneaux en fibres ou des panneaux agglomérés.

9. Procédé selon la revendication 7 ou 8, avec lequel le support (1) présente une bande de fibre de verre, de papier, de film d'aluminium, de film de matière plastique, de bitume ou une combinaison de ceux-ci.

10. Procédé selon l'une des revendications précédentes, avec lequel une couche extérieure est appliquée sur le matériau appliqué après l'application du matériau (2) sur le support (1).

11. Procédé selon la revendication 7 et 10, avec lequel un équipement à double voie est utilisé pour produire un composé du support (1), du matériau appliqué (2) et de la couché extérieure.

12. Procédé selon l'une des revendications précédentes, avec lequel le mouvement cyclique (11) est au moins un mouvement essentiellement translatoire.

13. Procédé selon la revendication 12, avec lequel le mouvement cyclique (11) présente une fonction course/temps dont le tracé est sinusoïdal, parabolique complexe ou en dents de scie avec les bords arrondis.

14. Procédé selon la revendication 12 ou 13, avec lequel un moteur linéaire (13) est utilisé pour produire le mouvement cyclique (11).

15. Procédé selon la revendication 12 ou 13, avec lequel un entraînement hydraulique est utilisé pour produire le mouvement cyclique (11).

16. Procédé selon la revendication 12 ou 13, avec lequel un moteur rotatif (7) muni d'une transmission à bielle (8) est utilisé pour produire le mouvement cyclique (11).

17. Procédé selon l'une des revendications précédentes, avec lequel le support (1) se déplace sur une bande transporteuse à rouleaux ou à courroie ou sur une table, l'orifice de sortie (3) étant logé sur un portique (6) au-dessus de la bande transporteuse ou de la table.

18. Procédé selon l'une des revendications précédentes, avec lequel le matériau coulant (2) sort horizontalement de l'orifice de sortie (3).

19. Procédé selon l'une des revendications précédentes, au moins la revendication 3, avec lequel une tête mélangeuse (5) suit le mouvement (11) de l'orifice de sortie (3) pour produire un mélange d'agents réactifs (2).

20. Procédé selon l'une des revendications précédentes, avec lequel le matériau est appliqué à partir d'au moins deux orifices de sortie, les zones respectives couvertes par le matériau sur le support dans le sens transversal étant pour l'essentiel disposées l'une à côté de l'autre.

21. Procédé selon l'une des revendications précédentes, avec lequel le matériau est appliqué à partir d'au moins deux orifices de sortie côte à côte.

22. Procédé selon l'une des revendications précédentes, avec lequel la largeur d'application (a) du matériau (2) sur le support (1) dans le sens transversal est au moins égale à 2 fois, de préférence 3 fois, encore mieux 4 fois et dans le cas le plus favorable 5 fois la largeur totale (b) du mouvement cyclique (11) de l'orifice de sortie (3).

23. Procédé selon l'une des revendications précédentes, avec lequel le matériau appliqué sur le support (1) est lissé par des jets de gaz sous pression (9, 10).

24. Procédé selon la revendication 23, avec lequel les jets de gaz sous pression (10) aplanit un renflement du bord d'une bande de matériau appliquée en faisant glisser vers l'extérieur une partie du matériau.

25. Dispositif pour réaliser le procédé selon l'une des revendications précédentes, comprenant
un dispositif de maintien pour le support plat,
un dispositif d'application (5) pour le matériau coulant (2) qui présente l'orifice de sortie (3), et
un dispositif d'entraînement (7, 13) pour produire les mouvements relatifs entre le support et l'orifice de sortie, de manière à ce que la largeur d'application dans le sens transversal est au moins égale à 1,5 fois la largeur du mouvement cyclique de l'orifice de sortie dans le sens transversal.

26. Dispositif selon la revendication 25, avec lequel le mouvement cyclique (11) de l'orifice de sortie (3) est programmable librement.

27. Dispositif selon la revendication 25 ou 26, avec lequel l'écart entre l'orifice de sortie (3) et le support est réglable.

28. Dispositif selon la revendication 25, 26 ou 27, avec lequel la vitesse de sortie du matériau coulant (2) de l'orifice de sortie (3) est réglable.
